# EUROPÄISCHE PATENTSCHRIFT

(11) **EP 3 875 908 B1**
(45) Veröffentlichungstag und Bekanntmachung des Hinweises auf die Patenterteilung: **23.02.2022**
(21) Anmeldenummer: 20161069.8
(22) Anmeldetag: 05.03.2020
(51) Int. Cl.: G01C 21/30, G01C 21/36, G06K 9/00, G01C 21/00, G01C 21/20

(54) **NAVIGIEREN EINES FAHRZEUGS UND VIRTUELLE SPURFÜHRUNGSVORRICHTUNG**
VEHICLE NAVIGATION AND VIRTUAL TRACK GUIDANCE DEVICE
NAVIGATION D'UN VÉHICULE ET DISPOSITIF DE GUIDAGE VIRTUEL

(43) Veröffentlichungstag der Anmeldung: 08.09.2021
(73) Patentinhaber: SICK AG, 79183 Waldkirch (DE)
(72) Erfinder: Schopp, Patrick, 79112 Freiburg (DE); Steder, Bastian, 79112 Freiburg (DE); Fischer, Fabian, 79312 Emmendingen (DE)

(56) Entgegenhaltungen:
- DE-A1-102007 006 870
- JP-A- H04 329 308
- US-A1- 2010 061 591
- US-A1- 2016 275 667

## Beschreibung

Die Erfindung betrifft ein Verfahren zum Navigieren eines Fahrzeugs und eine virtuelle Spurführungsvorrichtung für ein Fahrzeug nach dem Oberbegriff von Anspruch 1 beziehungsweise 11.

Ein herkömmliches Navigationsverfahren für fahrerlose Transportfahrzeuge (AGV, Automated Guided Vehicle) basiert auf einer Spurführung durch eine physische Spur oder Leitlinie. Die Spur ist beispielsweise als optisch erfassbares Band oder als magnetisches Band auf den Boden geklebt oder in den Boden eingelassen und wird mittels geeigneter Sensorik detektiert, etwa einer Kamera oder einem Hall-Sensor. Ein solcher Spurführungssensor gibt den jeweiligen Abstands zur Mitte der Spur aus, und mit dieser Information wird die Fahrt derart geregelt, dass das Fahrzeug kontinuierlich der Spur folgt. In den Boden eingelassene Spuren können nur mit hohem Aufwand verändert werden und kommen deshalb immer seltener zum Einsatz. Aufgeklebte Spuren lassen sich zwar einfacher verändern, sind jedoch einer hohen Belastung während des Betriebs der Anlage ausgesetzt. Durch Abnutzung und Verschmutzung kann es dann zu Fehlsteuerungen kommen, beziehungsweise das Fahrzeug ist nicht mehr in der Lage, auf der vorgegebenen Spur weiterzufahren, bis die Defekte durch Servicepersonal behoben sind.

Alternativ zu einer Spurführung sind Navigationsverfahren bekannt, die auf einer berührungslosen Konturerfassung der Umgebung basieren. Die natürlichen Konturen, an denen sich das Fahrzeug orientiert und lokalisiert, können überall oder an kritischen Stellen durch eigens angebrachte Reflektoren ergänzt oder ersetzt werden. Eine erforderliche Karte mit Konturinformationen der Umgebung wird entweder vorab erstellt oder entsteht während des Navigierens (SLAM, Simultaneous Localisation and Mapping). Hier muss das Fahrzeug mittels Pfadplanung selbständig seinen Weg finden. Das ist weitaus komplexer und aufwändiger als das oben genannte Verfahren mit Spurführung. Bei Störungen der Pfadplanung ist der Einsatz von geschultem Fachpersonal notwendig.

Um die Vorteile der Flexibilität der freien Navigation mit der einfachen Pfadplanung der Spurführung zu kombinieren, werden im Stand der Technik Navigationssysteme vorgeschlagen, die als virtuelle Spurführungssysteme bezeichnet werden können. Dabei fährt das Fahrzeug in einer Einlern- oder Umstellungsphase eine physische Spur ab und erzeugt sich eine Karte der Umgebung. Die Spur merkt sich das System virtuell als Fahrbahn oder Trajektorie. In einer dann spurfreien Betriebsphase navigiert das Fahrzeug anhand einer Konturvermessung der Umgebung und der Karte auf der vorgegebenen Trajektorie, so dass die ehemals physische Spur nun als virtuelle Spur wirkt. Das weitere Schicksal der physischen Spur ist dann ohne Belang. Dieses Vorgehen hat den Charme einer besonders einfachen Umrüstung, da die vorhandene physische Spur übernommen wird. Das virtuelle Spurführungssystem kann sogar die gleichen Steuerbefehle an die Fahrzeugsteuerung geben wie zuvor der ersetzte Spurführungssensor.

Ein derartiges virtuelles Spurführungssystem ist beispielsweise in der nachveröffentlichten deutschen Patentanmeldung mit dem Aktenzeichen 10 2019 123 659.2 beschrieben. Aus der EP 3 167 342 B1 ist ein virtuelles Spurfolge- und Umrüstverfahren für autonome Fahrzeuge bekannt. Die EP 2 818 954 A2 offenbart ein fahrerloses Transportfahrzeug und ein Verfahren zum Planen einer virtuellen Spur. Dabei wird jedoch die virtuelle Spur von Anfang an nur auf einem Computer geplant. Die WO 2018/051081 A1 befasst sich mit der Anpassung eines spurfolgenden AGV

Es besteht beim Umstieg von einem physischen Spurführungssystem die Erwartung, dass die Navigation ebenso robust funktioniert wie zuvor. Die Lokalisierung mittels Kontursensoren ist jedoch komplexer und damit zunächst fehleranfälliger. Ein wesentlicher Einflussfaktor auf die Genauigkeit und Robustheit der Lokalisierung ist der Abgleich der jeweils aufgenommenen Kontur zur Karte. Dabei können von Anfang an oder im Laufe des Betriebs Schwierigkeiten auftreten: Womöglich war die Karte an der Stelle des Abgleichs immer schon ungenau oder fehlerhaft. Ebenso ist denkbar, dass sich die Umgebung seit der Erstellung der Karte verändert hat. In einem weiteren Beispiel ist die aktuell aufgenommene Kontur verfälscht, weil sich ein bewegtes Objekt vor kartierten Konturen befindet.

Bis zu einem gewissen Grad können derartige Einflüsse toleriert werden. Werden sie jedoch zu groß, schlägt sich das in einem fehlerhaften Abgleich und damit einem Fehler in der Positionsschätzung nieder. Es ist auch mit manchen Techniken möglich, einen Abgleich zur Karte zu ignorieren und beispielsweise die aktuelle Position aus einer Historie heraus vorherzusagen, oder mittels anderer Sensorik wie der Drehzahl der Räder eine Position zu bestimmen. Das geht aber nur für gewisse Phasen, da sich dann Fehler der Lokalisierung aufakkumulieren.

Bisher wird weder die Güte der Karte selbst entlang der vorgesehenen Trajektorie des Fahrzeugs bewertet noch rechtzeitig geprüft, wie gut dann der jeweilige Abgleich mit der Karte funktioniert. Erst im Produktiveinsatz macht sich eine ungenügende Lokalisierung bemerkbar, sei es weil das Fahrzeug sich nicht mehr orientieren kann oder weil es gar einen falschen Weg einschlägt.

Aus der US 2016/0275667 A1 ist ein Verfahren zur Positionsbestimmung bekannt. Dabei werden Konturen aus der Umgebung vermessen und daraus Geometriemerkmale extrahiert, die mit einer als Fingerabdruckdatenbank gespeicherten Sammlung von bekannten Konturen abgeglichen werden. Es können mehrere bekannte Konturen probiert werden, und die Position wird anhand einer bekannten Kontur der Fingerabdruckdatenbank ermittelt, wenn dazu ein Übereinstimmungsgrad hoch genug ist.

Die US 2010/0061591 A1 befasst sich mit einer Objekterkennungsvorrichtung für ein Fahrzeug. Aus einer Karte sind die Positionen von Zielobjekten bekannt. Anhand einer geschätzten Eigenposition setzt das Fahrzeug einen Entfernungsbereich, in dem die Zielobjekte gesucht werden, um den Auswertungsaufwand zu reduzieren. Die jeweilige Eigenposition kann auf einer Karte angezeigt werden.

Die DE 10 2007 006 870 A1 offenbart ein Kartenbewertungssystem einer Navigationsvorrichtung eines Fahrzeugs. Das Fahrzeug bestimmt dabei zunächst seine Absolutposition beispielsweise mittels GPS.

Aus der JP H04 329308 A1 ist ein Fahrerdisplay bekannt, auf dem die aktuell bestimmte Position des Fahrzeugs dargestellt wird. Damit der Fahrer einschätzen kann, wie verlässlich diese Position ist, wird ihm das mit der Position angezeigt, etwa durch Farbe, Helligkeit oder Form einer Positionsmarke.

Es ist daher Aufgabe der Erfindung, eine verlässlichere Navigation zu ermöglichen. Diese Aufgabe wird durch ein Verfahren zum Navigieren eines Fahrzeugs und eine virtuelle Spurführungsvorrichtung für ein Fahrzeug nach Anspruch 1 beziehungsweise 11 gelöst. Das Fahrzeug navigiert längs einer vorgegebenen Trajektorie, die durch eine Spur vorgegeben wird. Mit einem Konturerfassungssensor wird eine jeweilige Kontur der Umgebung des Fahrzeugs erfasst. Die Kontur ist insbesondere eine Punktwolke, im allgemeinen eine 3D-Punktwolke, die aber beispielsweise auf eine Ebene beschränkt und damit effektiv nur eine 2D-Punktwolke sein kann, wie bei einem abstandsmessenden Laserscanner. Anhand dieser Kontur wird die eigene Position beziehungsweise Pose des Fahrzeugs bestimmt. Dabei wird hier eine Pose nicht als 6D-Position verstanden, sondern erfasst nur die Ausrichtung des Fahrzeugs in einem bis drei Freiheitsgraden. Die Position wird begrifflich von der Pose getrennt und kann ebenfalls in ein bis drei Freiheitsgraden bestimmt sein, insbesondere als eindimensionale Position längs der Spur, als zweidimensionale Position beispielsweise in einer Halle oder auch als dreidimensionale Position, etwa um Höhenunterschiede, Brückenkonstruktionen oder mehrere Stockwerke zu berücksichtigen.

Die Erfindung geht von dem Grundgedanken aus, die Verlässlichkeit zu bewerten, wie genau eine jeweilige Pose und/oder Position bestimmt ist. Dazu wird ein Güte- oder Verlässlichkeitsmaß bestimmt und der jeweiligen Position längs der Spur zugeordnet.

Die Erfindung hat den Vorteil, dass diejenigen Stellen erkennbar werden, an denen ein Fehlschlagen der Lokalisierung und in Folge des Navigierens wahrscheinlich ist. Das ist insbesondere überall an den Stellen oder Positionen längs der Spur der Fall, an denen der Abgleich der aufgenommenen Kontur mit Referenzinformationen beispielsweise auf einer Karte nicht zuverlässig funktioniert. Schwachstellen der Lokalisierung werden bereits vor dem produktiven Einsatz des Fahrzeuges und auch während des Betriebs der Anlage bemerkt. Dies ermöglicht es, frühzeitig entsprechende Maßnahmen zu ergreifen, und so erhöht sich die Verfügbarkeit des Fahrzeugs.

Die Spur ist eine virtuelle Spur, die insbesondere aus einer physischen Spur eingelernt wird. Anfänglich gibt es demnach eine physische Spur, wie eine optische oder magnetische Spur auf dem Boden. Daraus wird eine virtuelle Spur eingelernt, die demnach nur noch in Form entsprechender Daten existiert. Die virtuelle Spur kann rein virtuell verändert und prinzipiell auch rein virtuell vorgegeben sein, beispielsweise mit Hilfe einer graphischen Benutzeroberfläche auf einem Konfigurationsrechner. Durch Einlernen auf Basis einer physischen Spur wird, wie einleitend schon erklärt, die Umstellung auf eine Navigationslösung mit Konturerfassungssensoren erheblich vereinfacht.

Die Navigation auf der vorgegebenen Trajektorie erfolgt vorzugsweise durch jeweilige Korrekturen der Fahrzeugpose in Richtung auf die Spur. Die konkreten Steueranweisungen, mit denen die Pose so korrigiert wird, entsprechen der Regelung eines herkömmlichen Spurführungssystems mit physischer Spur. Das erleichtert eine Umrüstung noch weiter, da die Fahrzeugsteuerung letztlich dieselben Informationen beziehungsweise Befehle erhält wie zuvor.

Vorab wird eine Karte erstellt, in der Konturinformationen der Umgebung der Spur eingetragen sind. Das geschieht insbesondere auf mindestens einer Einlern- oder Referenzfahrt längs der Spur, während der fortlaufend die jeweilige Kontur gemessen wird, und diese Konturen werden dann zu der Karte zusammengesetzt. Dabei kann die Navigation noch mit einem herkömmlichen Spurführungssystem anhand einer physischen Spur erfolgen. Ein bevorzugtes Vorgehen beim Kartieren ist in der einleitend schon genannten deutschen Patentanmeldung mit dem Aktenzeichen 10 2019 123 659.2 beschrieben, auf die ergänzend Bezug genommen wird.

Zu der Karte ist bevorzugt mindestens eine Referenzkontur zu einer Position und/oder Pose des Fahrzeugs gespeichert, insbesondere mit einem Unsicherheitsmaß von Position und Pose. Es gibt demnach einen Referenzpunkt oder vorzugsweise viele Referenzpunkte auf der Karte, die eine bekannte Position und Pose mit einer bekannten Kontur verknüpfen, so wie der Konturerfassungssensor sie beim Kartieren aufzeichnet. An diesen Referenzpunkten kann sich das Verlässlichkeitsmaß orientieren.

Die Pose und/oder Position wird bevorzugt durch ein Übereinanderlegen einer aufgenommenen Kontur und mindestens einer Referenzkontur bestimmt. Bei dem Übereinanderlegen oder Matchen werden die beiden zu vergleichenden Konturen, die insbesondere jeweils als Punktwolken vorliegen, in möglichst gute Übereinstimmung gebracht. Dabei wird geschätzt, welche Pose und/oder Position gegenüber der Referenzsituation diese bestmögliche Übereinstimmung liefert. Beispiele für geeignete Matchingalgorithmen sind ein Least-Square-Schätzer, aber auch stichprobenartige Verfahren wie RANSAC (Random Sample Consensus) und andere sind denkbar, insbesondere solche, die bei SLAM Verwendung finden. Der Konturenvergleich kann mit der nächsten Referenzkontur, aber auch mit mehreren Referenzkonturen in der Nachbarschaft durchgeführt werden, wobei dann beispielsweise die beste Übereinstimmung oder eine statistische Verrechnung weiterverwendet wird.

Das Verlässlichkeitsmaß wird bevorzugt aus einem Grad an Überlappung oder Übereinstimmung von aktueller Kontur und Referenzkontur bestimmt. Dieses Verlässlichkeitsmaß beruht auf dem Gedanken, dass ein hochgradiger Überlapp für eine robuste Zuordnung spricht und ein nur geringer Überlapp wesentlich mehr Raum für Fehler und Verwechslungen bietet. Es ist denkbar, dass bestimmte Konturabschnitte ein unterschiedliches Gewicht bekommen. Insbesondere können Messungen auf Reflektoren einen deutlich höheren Einfluss erhalten.

Das Verlässlichkeitsmaß wird vorzugsweise als Rate bestimmt, wie oft der Grad an Überlappung bei verschiedenen Vergleichen von aktueller Kontur und Referenzkontur an einer Position einen Mindestgrad überschreitet. Dieses auch als Matching-Rate bezeichnete Verlässlichkeitsmaß fasst für eine bessere Statistik mehrere Konturvergleiche zusammen, die beispielsweise auf mehrfach von der gleichen Position aufgenommenen Konturen oder mehreren Fahrten längs der Spur beruhen. Es wird gezählt, wie oft der Konturvergleich eine hochgradige Übereinstimmung liefert. Das Ergebnis wird dann bevorzugt normiert und ergibt eine Matching-Rate mit Werten zwischen Null und Eins.

Das Verlässlichkeitsmaß wird bevorzugt aus einem Abstand zu einer Position und/oder Pose bestimmt, an dem aktuelle Kontur und Referenzkontur noch zu einem hohen Grad in Übereinstimmung gebracht werden konnten. Das ist ein alternativ oder zusätzlich herangezogenes Verlässlichkeitsmaß. Liefert ein Konturvergleich kein gutes Ergebnis, so wiegt das umso schwerer, je weiter entfernt die zugehörige Position von der letzten verlässlichen Schätzung entfernt ist. Denn für kurze Abstände lässt sich die fehlerhafte Lokalisierung noch ausgleichen, etwa durch Extrapolation, aber je länger dieser Abstand wird, desto stärker addieren sich die Fehler auf. Die letzte verlässliche Position und/oder Pose muss nicht zwingend an einer hochgradigen Übereinstimmung von gemessener Kontur und Referenzkontur festgemacht werden. Beispielsweise kann dort ein Positionscode gelesen werden, es können Reflektoren erfasst sein, oder das Fahrzeug hat erfolgreich einen bestimmten Arbeitsschritt durchgeführt, der nur an einer bestimmten Position überhaupt möglich ist.

Das Verlässlichkeitsmaß wird bevorzugt für mindestens eine Position längs der Spur dargestellt. Damit wird das Verlässlichkeitsmaß ortsbezogen zur Spur für das Bedien- oder Wartungspersonal erkennbar. Es ist vorstellbar, das Verlässlichkeitsmaß nicht eins zu eins der zugehörigen Position zuzuordnen. Beispielsweise könnte ein mittleres Verlässlichkeitsmaß über eine gewisse Nachbarschaft auf der Spur gebildet und dargestellt werden, insbesondere mit abnehmendem Gewicht je nach Abstand.

Eine Karte wird dargestellt, die Positionen der Spur und zugehörige Verlässlichkeitsmaße zeigt. Dabei wird besonders bevorzugt eine Karte mit der gesamten Spur gezeigt, die bei Bedarf auch ausschnittsweise vergrößert wird. Die Karte kann zusätzliche Orientierungsmerkmale aufweisen, insbesondere die Umgebungskonturen. Eine Darstellungsmöglichkeit besteht darin, die Spur selbst entsprechend dem jeweiligen Verlässlichkeitsmaß farb- oder graucodiert zu zeigen. Alternativ werden Zahlenwerte angezeigt, insbesondere jeweils auf Anforderung in einer grafischen Benutzeroberfläche durch Anklicken einer bestimmten Position auf der Spur oder als einen Mouse-Over-Effekt.

Vorzugsweise werden Positionen identifiziert, an denen das Verlässlichkeitsmaß Nachbesserungsmaßnahmen indiziert. Das kann automatisch durch ein einfaches Filter geschehen, das Bereiche der Spur markiert, in denen das Verlässlichkeitsmaß einen Mindestwert unterschreitet. Dadurch wird das Personal auf Schwachstellen aufmerksam, an denen die Navigation unterstützt werden sollte. Geeignete Nachbesserungsmaßnahmen können vom Wartungspersonal gewählt, aber auch automatisch vorgeschlagen oder sogar, insbesondere nach einer Freigabe, sogar automatisch durchgeführt werden. Einige Beispiele für Nachbesserungsmaßnahmen sind: Reflektoren in der Umgebung hinzufügen oder neu positionieren, Referenzkonturen hinzufügen oder neu aufnehmen, Positionscodes oder einen Teil einer physischen Spur anbringen, zumindest Teile einer Karte mit Konturinformationen der Umgebung aufnehmen oder neu aufnehmen. Einige dieser Maßnahmen, wie das Anbringen von Reflektoren, lassen sich nicht automatisieren, sehr wohl aber unterstützen. So kann sich etwa das Fahrzeug an die Wartungsstelle begeben und Anweisungen erteilen. Das Aufnehmen neuer Referenzkonturen oder das zumindest teilweise neue Kartieren dagegen kann selbsttätig erfolgen, unter Umständen sogar ohne Unterbrechung während des üblichen Betriebsablaufs.

Das Verlässlichkeitsmaß wird bevorzugt im Rahmen einer Inbetriebnahme und/oder während des Navigierens bestimmt. Bei einer Bestimmung im Rahmen einer Inbetriebnahme kann schon vorab bewertet werden, ob wahrscheinlich ein reibungsloser Betrieb möglich sein wird, und gegebenenfalls noch eingegriffen und nachgebessert werden. Während des Betriebs kann das Fahrzeug entsprechende Diagnosedaten auf Abruf bereitstellen, zyklisch oder kontinuierlich selbst erzeugen und/oder dazu auffordern, dass das Personal die Diagnosedaten prüft beziehungsweise vorgeschlagene Nachbesserungsmaßnahmen ergreift.

In vorteilhafter Weiterbildung wird eine virtuelle Spurführungsvorrichtung für ein Fahrzeug bereitgestellt, insbesondere ein fahrerloses Fahrzeug, das einen Konturerfassungssensor zur Erfassung einer Kontur einer Umgebung des Fahrzeugs und eine Steuer- und Auswertungseinheit aufweist, in der ein erfindungsgemäßes Verfahren implementiert ist. Die Steuer- und Auswertungseinheit kann praktisch beliebig auf den Konturerfassungssensor, ein eigenes Gerät, die Fahrzeugsteuerung oder auch ein übergeordnetes System verteilt sein, wie eine Anlagensteuerung oder Cloud.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines Fahrzeugs mit Konturvermessungssensor, das entlang einer virtuellen Spur navigiert;
- Fig. 2: eine beispielhafte Karte mit Konturen der Umgebung der Spur;
- Fig. 3: eine schematische Darstellung verschiedener Posen während der Navigation sowie von Referenzpunkten im Bereich der Spur;
- Fig. 4: eine Karte mit Darstellung einer Verlässlichkeit der Positions- und Posenschätzung längs der Spur, wobei die Verlässlichkeit als Matching Rate gemessen ist; und
- Fig. 5: ein Karte ähnlich Figur 4, wobei die Verlässlichkeit nun als Abstand zur letzten gesichert erfassten Position und Pose gemessen ist.

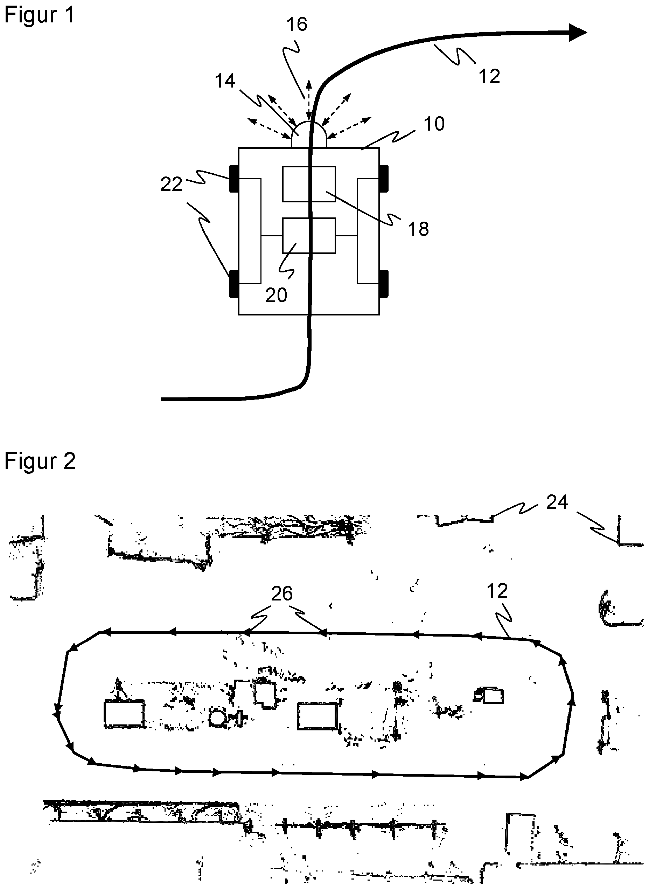

Figur 1 zeigt in einer schematischen Draufsicht ein Fahrzeug 10, das längs einer Spur 12 navigiert. Das Fahrzeug 10 weist einen Konturerfassungssensor 14 auf, der hier als Laserscanner dargestellt ist. Der Laserscanner sendet Scanstahlen 16 in unterschiedliche Richtungen aus und misst den Abstand zu einem jeweils angetasteten Objektpunkt mit einem Lichtlaufzeitverfahren (TOF, Time of Flight). Alternativ zu einem Laserscanner oder Lidar ist ein anderer Konturerfassungssensor 14 vorstellbar, der beispielsweise auf einer 3D-Kamera, insbesondere Stereokamera, Lichtlaufzeitkamera oder Lichtschnittkamera, einem Radar oder Ultraschall basiert. Mehrere Konturerfassungssensoren 14 können einander für einen größeren Sichtbereich oder Rundumblick ergänzen.

Eine Steuer- und Auswertungseinheit 18 ist mit dem Konturerfassungssensor 14 verbunden, um dessen Konturmessdaten auszuwerten und das noch zu beschreibende Navigationsverfahren zu steuern. Die Steuer- und Auswertungseinheit 18 wiederum steht in Kommunikationsverbindung mit einer Fahrzeugsteuerung 20. Die Fahrzeugsteuerung 20 wirkt auf die Räder 22 oder deren Achsen ein, um das Fahrzeug zu beschleunigen, zu bremsen und zu lenken. Umgekehrt kann die Fahrzeugsteuerung 20 von den Rädern 22auch Sensorinformationen erhalten. Steuer- und Auswertungseinheit 18 kann zumindest teilweise in dem Konturerfassungssensor 14 implementiert sein. Ebenso ist auch die klare Trennung von Steuer- und Auswertungseinheit 18 und Fahrzeugsteuerung 20 nur beispielhaft zu verstehen.

Das Fahrzeug 10 navigiert in einer bevorzugten Ausführungsform zunächst in einer Einlernphase mit Hilfe von nicht gezeigten, an sich bekannten Spurführungssensoren, die eine physische Spur 12 erfassen. Dabei ist der Konturerfassungssensor 14 aktiv und erzeugt Konturinformationen der Umgebung der Spur 12, die zu einer Karte kombiniert werden. Im weiteren Betrieb ist dann die physische Spur 12 verzichtbar und durch eine virtuelle Spur 12 ersetzt, die lediglich noch die gewünschte Trajektorie angibt. Die Navigation erfolgt dann anhand einer Lokalisierung von Position und/oder Pose des Fahrzeugs 10 mittels eines Abgleichs aktuell mit dem Konturerfassungssensor 14 aufgenommener Konturinformationen und der Karte. Es sei daran erinnert, dass der Begriff Pose hier nur für die Ausrichtung des Fahrzeugs 10 ohne Einschluss der Position verwendet wird. Die Steuer- und Auswertungseinheit 18 kann auch anhand der virtuellen Spur 12 und der Konturinformationen für die Fahrzeugsteuerung 20 gleichartige Steuerungsdaten erzeugen wie zuvor mit dem Spurführungssensor aus der physischen Spur 12. Das hier nur zusammenfassend erläuterte Prinzip eines virtuellen Spurführungssensors mit Erstellen einer Karte und späterer Lokalisierung und Navigation anhand der Karte wird ausführlich in der deutschen Patentanmeldung mit dem Aktenzeichen 10 2019 123 659.2 beschrieben.

Figur 2 zeigt ein Beispiel einer Karte der Kontur 24 in der Umgebung der Spur 12. Eine solche Karte entsteht aus zahlreichen Messungen des Konturvermessungssensors 14 an verschiedenen Positionen längs der Spur 12, wobei die einzelnen Konturen zu der Kontur 24 zusammengesetzt werden.

Referenzpunkte 26 symbolisieren durch die dargestellten Dreiecke die Posen des Fahrzeugs 10 während einer Kartierungsfahrt. Die jeweils am Referenzpunkt 26 erfasste Kontur wird als Referenzkontur mit der zugehörigen Position und Pose gespeichert. Zusätzlich kann sich die Steuer- und Auswertungseinheit 18 eine Unsicherheit der Position beziehungsweise Pose merken. Wenn ein passend dichtes Netz an Referenzpunkten 26 gewählt ist und die Referenzkonturen in ein gemeinsames Koordinatensystem transformiert werden, dann ergibt sich daraus die vollständige in Figur 2 gezeigte Kontur 24 als eine konsistente Darstellung der Umgebung in Form einer Punktwolke.

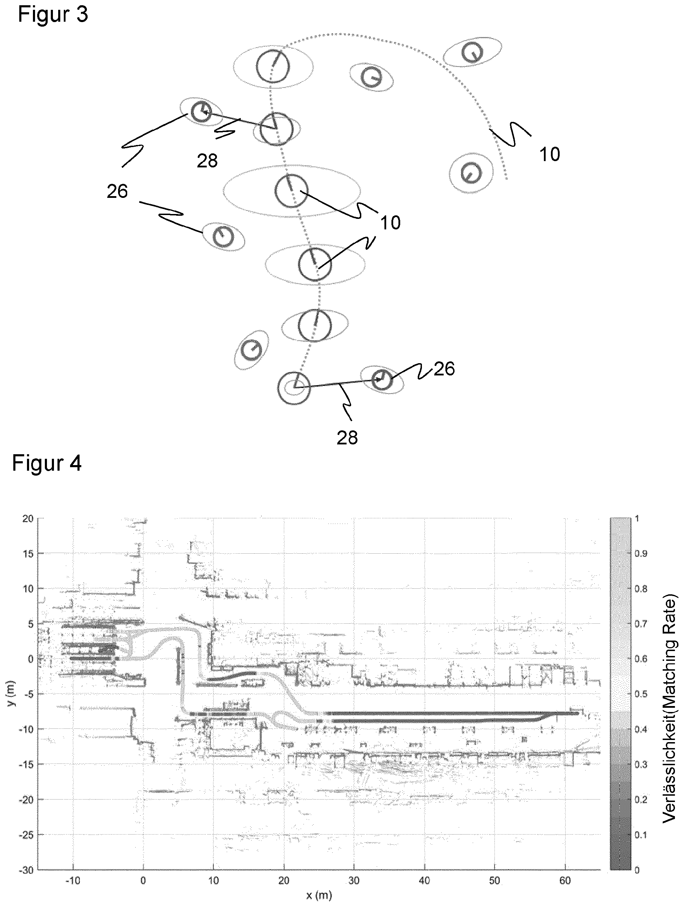

Figur 3 illustriert nochmals die Navigation längs der Spur 12. Das Fahrzeug 10 ist an mehreren Positionen mit einem Strich dargestellt, der einer dort bestimmten Pose entspricht. In gleicher Weise sind mehrere Referenzpunkte 26 gezeigt, die soeben zu Figur 2 erläutert wurden. Eine umgebende Ellipse repräsentiert die jeweiligen Unsicherheiten.

Die Lokalisierung basiert auf einem Abgleich von gemessenen und bekannten Konturen. In einer vorteilhaften Ausführungsform umfasst die Navigation zwei Schritte, nämlich eine Prädiktion und eine Korrektur. Der erste Schritt der Prädiktion ist hier nicht von besonderem Belang. Dabei wird die Kontur einer Ausgangsposition als Keyframe gesetzt, an dem sich das Fahrzeug 10 solange orientiert, bis das Keyframe nicht mehr ausreichend zu sehen ist und durch die aktuelle Kontur ersetzt wird. Dabei schaukeln sich die Unsicherheiten nach und nach auf, die Unsicherheiten repräsentierenden Ellipsen werden immer größer. Es sind ergänzende Verfahren denkbar, um die Unsicherheiten abzumildern, wie eine Vorhersage aus der bisherigen Bewegungshistorie heraus, die beispielsweise Kalman-Filter verwenden, oder die Verwendung weiterer Sensorik, die etwa die Stellung und/oder Drehgeschwindigkeit der Räder 22 erfassen.

Der zweite Schritt ist eine Korrektur anhand der Referenzpunkte 26, mit der ein Abgleich zur Karte realisiert wird. Dabei muss nicht nach jedem Prädiktionsschritt ein Korrekturschritt erfolgen, sondern es können mehrere Prädiktionsschritte erfolgen, bevor ein Korrekturschritt ausgeführt wird. Dazu wird die aktuell aufgenommene Kontur des Konturvermessungssensors 14 mit der Referenzkontur verglichen ("Scan-Matching"). Ein solcher Scan-Matching-Algorithmus ist an sich bekannt. Als Eingangswerte erhält der Scan-Matching-Algorithmus zwei Konturen beispielsweise in Form von 2D- oder 3D-Punktwolken in einem gemeinsamen Koordinatensystem, wie Fahrzeugkoordinaten. Dann wird die Transformation gesucht, mit denen die geometrischen Distanzen zwischen den jeweiligen Punkten minimiert werden. Das Ergebnis dieses Konturvergleichs ist demnach eine optimale Transformation, die beide Konturen in bestmögliche Übereinstimmung bringt. Diese Transformation wird dann verwendet, um die Fahrzeugpose zu korrigieren. Das geschieht in Figur 3 zweimal und wird durch Linien 28 gezeigt. Die Unsicherheit reduziert sich aufgrund der Korrektur. Die Korrektur kann noch einer Plausibilitätsprüfung unterzogen werden.

Der Abgleich kann auch zu mehreren Referenzkonturen erfolgen. Es werden vorzugsweise immer die nächste beziehungsweise die nächsten Referenzkonturen verwendet. Bei dem Konturvergleich können erkannte Reflektoren, die in der Umgebung angebracht sind, höher gewichtet werden als Konturen mit normaler Remission. Konturen mit normaler Remission ergeben sich aus natürlichen Objekten, wie beispielsweise Gebäude, Regale, Wände und dergleichen, während Reflektoren eigens alleine für eine bessere Lokalisierung angebracht sein können. Dies kann die Robustheit des Systems erhöhen, da Reflektoren eine besonders sichere Assoziation zwischen kartierter Struktur und aufgenommenem Scan ermöglichen.

Wie schon erwähnt, ist das primäre Ergebnis des Scan-Matching-Algorithmus' eine optimale Transformation, deren Anwendung auf die aktuelle Kontur eine bestmögliche Übereinstimmung mit der Referenzkontur erbringt. Als weiteres Ergebnis wird aber auch die Güte der Übereinstimmung bewertet. Das lässt sich an den verbleibenden Distanzen der beiden Punktwolken messen, aber auch daran, mit welchem Anteil beide Konturen überlappen. Die Überlappung wird kleiner, wenn die Referenzkontur in der aktuellen Kontur nur teilweise wiedererkannt wird. Das kann verschiedene Ursachen haben. Beispielsweise unterscheidet sich die Perspektive bei der Aufnahme der aktuellen Kontur stark von der, die das Fahrzeug 10 während der Kartierung bei Aufnahme der Referenzkontur hatte, ein Fremdobjekt schattet die Referenzkontur zumindest teilweise ab, oder die Umgebung hat sich verändert.

Wenn die Überlappung zu gering ist, erhöht das die Wahrscheinlichkeit, dass die berechnete optimale Transformation systematische Fehler aufweist. Das würde zu entsprechend verzerrter Lokalisierung und damit einem möglichen Divergieren der Fahrzeugposition und -pose führen. Deshalb werden vorzugsweise Scan-Matching-Ergebnisse verworfen, die eine Überlappung unterhalb eines gewissen Mindestgrades aufweisen, wobei der Grad beispielsweise mit einer Schwelle festgelegt ist.

Der Grad an Überlappung kann nun zugleich zum Bilden eines Verlässlichkeitsmaßes herangezogen werden, um Bereiche der Spur 12 zu identifizieren, in denen die Navigation weniger zuverlässig ist beziehungsweise an denen mit Fehlern oder gar einem Ausfall zu rechnen ist. Ein denkbares Verlässlichkeitsmaß ist unmittelbar der Grad an Überlappung selbst. Etwas robuster, weil es auf mehr Messungen basiert, ist eine sogenannte Matching-Rate. Damit wird die Anzahl aufgrund zu geringer Überlappung verworfener Scan-Matchings analysiert. Längs der Trajektorie des Fahrzeugs 10 wird eine Eins gespeichert, wenn eine gemessene Kontur zum Abgleich mit der Karte verwendet werden konnte, die Überlappung mit der Referenzkontur also groß genug war, und sonst eine Null. Die Matching-Rate wird nun als Mittelwert über eine bestimmte Anzahl gemessener Konturen gebildet, und zwar von längs der Spur 12 benachbarten Positionen aufgenommene Konturen und/oder in mehreren Fahrten längs der Spur 12 nacheinander aufgenommene Konturen. Die Matching-Rate ist demnach eine Zahl zwischen Null = keine Kontur hatte ausreichenden Überlapp und konnte für eine Korrektur verwendet werden bis zu Eins = alle Messungen hatten ausreichenden Überlapp und wurden zum Abgleich mit der Karte verwendet.

Figur 4 zeigt nun eine Karte mit der Spur 12, für deren Positionen farbcodiert das jeweils für diese Position bestimmte Verlässlichkeitsmaß angezeigt wird. Das Verlässlichkeitsmaß ist hier beispielhaft die soeben eingeführte Matching-Rate. Anstelle einer Farbcodierung sind andere Repräsentationen ebenso möglich, etwa die Anzeige als Muster oder mit Hilfe von Zahlenwerten. Eine hohe Matching-Rate zeigt an, dass hier die Lokalisierung wie vorgesehen funktioniert. Eine niedrige Matching-Rate hingegen deutet auf Bereiche hin, in denen die Robustheit und Genauigkeit beeinträchtigt sein könnte.

An den Stellen mit geringer Verlässlichkeit kann der Anlagenbetreiber entweder auf eine andere Navigationstechnik zurückgreifen, insbesondere durch Folgen einer physischen Spur 12, oder Maßnahmen ergreifen, mit denen die Verlässlichkeit und hier beim gewählten Maß Matching-Rate insbesondere der Abgleich mit der Karte verbessert wird. Denkbare Maßnahmen ist das Anbringen von Reflektoren, das Entfernen störender Objekte oder eine erneute Kartierung. Letzteres kann das Fahrzeug 10 auch eigenständig vornehmen, wobei dafür vorzugsweise noch eine Freigabe eingeholt wird. Die Steuer- und Auswertungseinheit 18 kann beim Anbringen von Reflektoren und dem Entfernen von Objekten zumindest automatisch unterstützen, indem ein entsprechender Hinweis erfolgt, der auch geeignete Anbringorte von Reflektoren beziehungsweise eine genaue Bezeichnung des störenden Objekts beinhalten kann.

Um eine Karte wie diejenige der Figur 4 zu erzeugen, fährt das Fahrzeug 10 in einem Testlauf, insbesondere schon während oder unmittelbar nach der Kartierung, seine vorgesehene Trajektorie längs der Spur 12 ab, misst Konturen und bestimmt das zugehörige Verlässlichkeitsmaß. Stattdessen oder ergänzend kann das Verlässlichkeitsmaß auch zyklisch, auf Anforderung oder kontinuierlich im regulären Betrieb bestimmt werden. Die Analyse erfolgt offline, oder die positionsbezogenen Verlässlichkeitsmaße werden bereits fortlaufend insbesondere während des Betriebs ausgegeben. Dadurch kann eine kritische Degeneration rechtzeitig bemerkt werden.

Die Berechnung einer Matching-Rate ist auch auf andere Art denkbar als anhand der genannten Überlappungsbedingung. Diese Form der Matching-Rate ist ein bevorzugter Indikator und sehr einfach berechenbar, wenn schon im Rahmen der Navigation Korrekturen nur aus hinreichend guten Scan-Matchings erfolgen sollen. Es sind aber andere Vorgehensweisen vorstellbar, um zu bewerten, wie gut die aktuelle Kontur an der jeweiligen Position in die Karte passt.

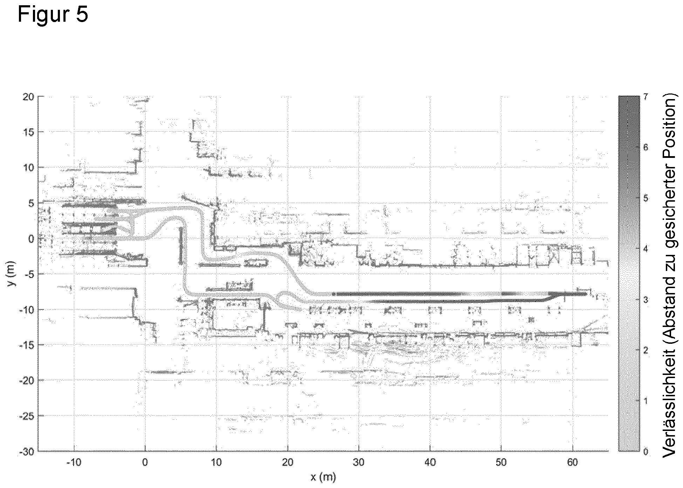

Figur 5 zeigt eine Karte ähnlich Figur 4, jedoch mit einem anderen Verlässlichkeitsmaß. Damit soll weiter illustriert werden, dass keineswegs zwingend die in Figur 4 verwendete Matching-Rate verwendet werden muss. In Figur 5 wird statt der Matching-Rate der Abstand, vorzugsweise der gefahrene Abstand längs der Spur 12, seit der letzten verlässlich bekannten Position und Pose bestimmt. Verlässlich bekannt ist eine Position und Pose insbesondere im obigen Sinne, wenn das Scan-Matching eine hohe Überlappung erzielt. Alternativ können aber auch gesicherte Positionen und Posen auf andere Weise gewonnen werden, beispielsweise durch Positionscodes, die von einem optischen Codeleser oder RFID-Leser des Fahrzeugs 10 erfasst werden, oder weil das Fahrzeug 10 eine bestimmte eindeutige Arbeitsposition erreicht und beispielsweise etwas entladen oder zugeladen hat.

Der Abstand zu einer gesicherten Position und Pose ist deshalb ein gutes Verlässlichkeitsmaß, weil die Lokalisierung auf kurzen Strecken auch durch Prädiktion allein noch relativ kleine Fehler aufweist. Erst bei größerer Drift ist eine Korrektur beispielsweise durch Abgleich mit der Karte, wie oben zu Figur 3 erläutert, dringend erforderlich. Man kann dies so zusammenfassen, dass mit einer Karte nach Figur 4 anhand einer Matching-Rate genauer zu erkennen ist, wo eine Gegenmaßnahme erforderlich ist, während eine Karte nach Figur 5 anhand eines Abstands zu einer gesicherten Position besser quantifiziert, wie dringend eine Gegenmaßnahme ergriffen werden sollte. Das illustriert, dass es nützlich sein kann, mehrere Verlässlichkeitsmaße auszuwerten.

## Patentansprüche

1. Verfahren zum Navigieren eines Fahrzeugs (10), bei dem mit einem Konturerfassungssensor (14) eine Kontur einer Umgebung des Fahrzeugs (10) erfasst, anhand der Kontur eine Position und/oder Pose des Fahrzeugs (10) bestimmt und ein Verlässlichkeitsmaß ermittelt wird, wobei vorab eine Karte erstellt wird, in der Konturinformationen (24) der Umgebung einer Spur (12) eingetragen sind,
**dadurch gekennzeichnet,**
**dass** das Fahrzeug durch eine virtuelle Spur (12) geführt längs einer vorgegebenen Trajektorie navigiert, dass das Verlässlichkeitsmaß angibt, wie genau die Position und/oder Pose bestimmt ist, einer Position längs der Spur (12) zugeordnet und in Form einer Karte dargestellt wird, die Positionen der Spur (12) und zugehörige Verlässlichkeitsmaße zeigt, so dass diejenigen Positionen erkennbar werden, an denen ein Fehlschlagen der Lokalisierung und in Folge des Navigierens wahrscheinlich ist.

2. Verfahren nach Anspruch 1,
wobei die Spur (12) eine virtuelle Spur ist, die aus einer physischen Spur eingelernt wird.

3. Verfahren nach Anspruch 1 oder 2,
wobei die Navigation auf der vorgegebenen Trajektorie durch jeweilige Korrekturen der Fahrzeugpose in Richtung auf die Spur (12) erfolgt.

4. Verfahren nach Anspruch 1,
wobei zu der Karte mindestens eine Referenzkontur zu einer Position und/oder Pose des Fahrzeugs (10) gespeichert ist, insbesondere mit einem Unsicherheitsmaß von Position und Pose.

5. Verfahren nach Anspruch 4,
wobei die Pose und/oder Position durch ein Übereinanderlegen einer aufgenommenen Kontur und mindestens einer Referenzkontur bestimmt wird.

6. Verfahren nach Anspruch 4 oder 5,
wobei das Verlässlichkeitsmaß aus einem Grad an Überlappung oder Übereinstimmung von aktueller Kontur und Referenzkontur bestimmt wird.

7. Verfahren nach Anspruch 6,
wobei das Verlässlichkeitsmaß als Rate bestimmt wird, wie oft der Grad an Überlappung bei verschiedenen Vergleichen von aktueller Kontur und Referenzkontur an einer Position einen Mindestgrad überschreitet.

8. Verfahren nach einem der Ansprüche 5 bis 7,
wobei das Verlässlichkeitsmaß aus einem Abstand zu einer Position und/oder Pose bestimmt wird, an dem aktuelle Kontur und Referenzkontur noch zu einem hohen Grad in Übereinstimmung gebracht werden konnten.

9. Verfahren nach einem der vorhergehenden Ansprüche,
wobei Positionen identifiziert werden, an denen das Verlässlichkeitsmaß Nachbesserungsmaßnahmen indiziert, insbesondere indem automatisch mindestens eine der folgenden Nachbesserungsmaßnahmen vorgeschlagen und/oder ergriffen wird: Reflektoren in der Umgebung hinzufügen oder neu positionieren, Referenzkonturen hinzufügen oder neu aufnehmen, Positionscodes oder einen Teil einer physischen Spur anbringen, zumindest Teile einer Karte mit Konturinformationen der Umgebung aufnehmen oder neu aufnehmen.

10. . Verfahren nach einem der vorhergehenden Ansprüche,
wobei das Verlässlichkeitsmaß im Rahmen einer Inbetriebnahme und/oder während des Navigierens bestimmt wird.

11. Virtuelle Spurführungsvorrichtung für ein Fahrzeug (10), insbesondere fahrerloses Fahrzeug, mit einem Konturerfassungssensor (14) zur Erfassung einer Kontur (24) einer Umgebung des Fahrzeugs (10) und mit einer Steuer- und Auswertungseinheit (18),
**dadurch gekennzeichnet,**
**dass** in der Steuer- und Auswertungseinheit (18) ein Verfahren nach einem der vorhergehenden Ansprüche implementiert ist.

## Claims

1. A method for navigating a vehicle (10), wherein a contour of an environment of the vehicle (10) is detected by means of a contour detection sensor (14), a position and/or pose of the vehicle (10) is determined on the basis of the contour, and a reliability measure is determined, a map being generated in advance in which contour information (24) of the environment of a trail (12) is entered, **characterized in that** the vehicle navigates along a predetermined trajectory guided by a virtual trail (12), **in that** the reliability measure indicates how precisely the position and/or pose is determined, the reliability measure being assigned to a position along the trail (12) and being displayed in the form of a map that shows positions of the trail (12) and associated reliability measures, so that those positions can be identified at which a failure of the localization and, as a consequence, of the navigation is likely to occur.

2. The method according to claim 1,
wherein the trail (12) is a virtual trail learned from a physical trail.

3. The method according to claim 1 or 2,
wherein navigation on the predetermined trajectory is performed by respective corrections of the vehicle pose in the direction of the trail (12).

4. The method according to claim 1,
wherein at least one reference contour for a position and/or pose of the vehicle (10) is stored for the map, in particular with an uncertainty measure of position and pose.

5. The method according to claim 4,
wherein the pose and/or position is determined by superimposing a recorded contour and at least one reference contour.

6. The method according to claim 4 or 5,
wherein the reliability measure is determined from a degree of overlap or match between the current contour and the reference contour.

7. The method according to claim 6,
wherein the reliability measure is determined as the rate at which the degree of overlap exceeds a minimum degree in various comparisons of the current contour and the reference contour at a position.

8. The method according to any of claims 5 to 7,
wherein the reliability measure is determined from a distance to a position and/or pose at which the current contour and the reference contour could still be brought into agreement to a high degree.

9. The method according to any of the preceding claims,
wherein positions are identified where the reliability measure indicates remedial actions, in particular by automatically proposing and/or taking at least one of the following remedial actions: Adding or repositioning reflectors in the environment, adding or re-recording reference contours, applying position codes or part of a physical trail, recording or re-recording at least parts of a map with contour information of the environment.

10. The method according to any one of the preceding claims,
wherein the reliability measure is determined during setup and/or during navigation.

11. A virtual trail guidance apparatus for a vehicle (10), in particular a driverless vehicle, having a contour detection sensor (14) for detecting a contour (24) of an environment of the vehicle (10) and having a control and evaluation unit (18), **characterized in that** a method according to any of the preceding claims is implemented in the control and evaluation unit (18).

## Revendications

1. Procédé de navigation d'un véhicule (10), dans lequel un contour d'un environnement du véhicule (10) est détecté au moyen d'un capteur de détection de contour (14), une position et/ou une pose du véhicule (10) est déterminée sur la base du contour, et une mesure de fiabilité est déterminée, une carte étant générée à l'avance dans laquelle des informations de contour (24) de l'environnement d'une piste (12) sont entrées,
**caractérisé en ce que** le véhicule navigue le long d'une trajectoire prédéterminée guidée par une piste virtuelle (12), **en ce que** la mesure de fiabilité indique avec quelle précision la position et/ou la pose est déterminée, la mesure de fiabilité étant attribuée à une position le long de la piste (12) et étant affichée sous la forme d'une carte qui montre les positions de la piste (12) et les mesures de fiabilité associées, de sorte que ces positions peuvent être identifiées au niveau desquelles une défaillance de la localisation et, par conséquent, de la navigation est probable.

2. Procédé selon la revendication 1,
dans lequel la piste (12) est une piste virtuelle apprise à partir d'une piste physique.

3. Procédé selon la revendication 1 ou 2,
dans lequel la navigation sur la trajectoire prédéterminée est effectuée par des corrections respectives de la pose du véhicule en direction de la piste (12).

4. Procédé selon la revendication 1,
dans lequel au moins un contour de référence pour une position et/ou une pose du véhicule (10) est mémorisé pour la carte, en particulier avec une mesure d'incertitude de la position et de la pose.

5. Procédé selon la revendication 4,
dans lequel la pose et/ou la position est déterminée par superposition d'un contour enregistré et d'au moins un contour de référence.

6. Procédé selon la revendication 4 ou 5,
dans lequel la mesure de fiabilité est déterminée à partir d'un degré de chevauchement ou de correspondance entre le contour actuel et le contour de référence.

7. Procédé selon la revendication 6,
dans lequel la mesure de fiabilité est déterminée comme le taux auquel le degré de chevauchement dépasse un degré minimum dans diverses comparaisons du contour actuel et du contour de référence à une position.

8. Procédé selon l'une des revendications 5 à 7,
dans lequel la mesure de fiabilité est déterminée à partir d'une distance par rapport à une position et/ou une pose à laquelle le contour actuel et le contour de référence pourraient encore être mis en concordance à un degré élevé.

9. Procédé selon l'une des revendications précédentes,
dans lequel on identifie les positions où la mesure de fiabilité indique des actions correctives, notamment en proposant et/ou en prenant automatiquement au moins une des actions correctives suivantes : ajout ou repositionnement de réflecteurs dans l'environnement, ajout ou réenregistrement de contours de référence, application de codes de position ou d'une partie d'une piste physique, enregistrement ou réenregistrement d'au moins des parties d'une carte avec des informations sur les contours de l'environnement.

10. Procédé selon l'une des revendications précédentes,
dans lequel la mesure de fiabilité est déterminée pendant la mise en place et/ou pendant la navigation.

11. Dispositif de guidage sur piste virtuelle pour un véhicule (10), en particulier un véhicule sans conducteur, avec un capteur de détection de contour (14) pour détecter un contour (24) d'un environnement du véhicule (10) et avec une unité de commande et d'évaluation (18),
**caractérisé en ce qu'**un procédé selon l'une des revendications précédentes est mis en oeuvre dans l'unité de commande et d'évaluation (18).
